Europäisches Patentamt

European Patent Office

Office européen des brevets

(19)

(11) Publication number: **0 359 511**
**A2**

# (12) EUROPEAN PATENT APPLICATION

(21) Application number: **89309217.1**

(22) Date of filing: **11.09.89**

(51) Int. Cl.⁵: **G 11 B 5/70**
**G 11 B 5/71**

(30) Priority: **12.09.88 US 242403**

(43) Date of publication of application:
**21.03.90 Bulletin 90/12**

(84) Designated Contracting States:
**AT CH DE FR GB IT LI NL SE**

(71) Applicant: **AMPEX CORPORATION**
**401 Broadway M.S. 3-35**
**Redwood City California 94063-3199 (US)**

(72) Inventor: **Scott, Lawrence M.**
**6593 Flanders Drive**
**Newark California 94560 (US)**

**Curtis, John L.S.**
**Cannstatter Strasse 18**
**D-7500 Karlsruhe 41 (DE)**

(74) Representative: **Horton, Andrew Robert Grant et al**
**BOWLES HORTON Felden House Dower Mews High Street**
**Berkhamsted Hertfordshire HP4 2BL (GB)**

(54) **Method of magnetic particle treatment and resulting recording media.**

(57) This invention provides methods and compositions for reducing or eliminating undesired self condensation of ketone solvents in magnetic metal particle coating mixes used in the manufacture of magnetic recording media. The self condensation products, such as dimers, of ketone solvents, such as cyclohexanone, are reduced or eliminated by treating the magnetic metal particles with a combination of a dispersing agent and a fatty acid before placing the particles in contact with a ketone solvent used in forming a magnetic coating mix containing the magnetic metal particles. The resulting recording media have improved properties, reduced solvent retention, and reduced odor.

**Description**

This invention relates to the preparation and use of magnetic metal particle compositions in magnetic recording media.

## BACKGROUND OF THE INVENTION

In the manufacture of magnetic recording media, including tapes and discs, a coating composition or mix containing magnetic metal particles is applied to a base film, the coating is dried and/or cured to fix the magnetic metal particles on the base film. In some cases a topcoat is applied over the magnetic metal particle coating to protect metal particles from abrasion and physical damage when the magnetic recording media is used and/or to provide a lubricant on the recording media. In some cases, a back coat is applied to the back of the base film and in some cases a subcoat is applied to the base film before the magnetic metal particle coating is applied. This invention relates to the magnetic metal particles and to the recording media produced with the particles. Therefore this invention is useful in any of the above type of recording media in which a coating of metal particles is formed for magnetically storing information.

The magnetic metal particle coating composition or mix usually comprises a solvent system containing the magnetic metal particles, a dispersant for the particles and a polymeric binder for fixing the metal particles on the base film to provide a magnetic recording layer. The mix is normally prepared by dissolving or mixing the binder in the solvent, dispersing the magnetic particles in the solvent with a dispersant, adding other additives such as lubricants, anti-static agents, abrasives, etc., and milling the mix, e.g., in a sand mill or ball mill, to evenly disperse the magnetic metal particles. The milled mix is applied to the base film in the form of a thin coating which is then dried to cure or fix the binder and to remove the solvents.

Examples of magnetic particle coating compositions and mixes are disclosed in U.S. patents 2,654,681 to Lueck; 3,144,352 to Talley; 3,647,539 to Weber; 3,205,092 to Rosenberg; 3,804,810 to Fryd; 4,197,347 to Ogawa; 4,431,604 to Sata et al.; 4,501,795 to Takeuchi et al.; 4,505,990 to Dasgupta; and 4,663,209 to Aonuma et al.

It is important in this manufacturing process that the solvent be essentially completely removed from the final recording media product, because any significant solvent remaining in the coating or on the base film can deteriorate the properties of the magnetic recording media. Excess solvent retention can interfere with the effectiveness of the binder, can plasticize the base film and can cause undesirable odors in the final recording media product.

A preferred class of solvents for use in the magnetic metal particle coating composition or mix are ketones, such as cyclohexanone, methyl isobutyl ketone and methyl ethyl ketone. A particularly preferred solvent is cyclohexanone. However, we have found that the ketone solvents, particularly cyclohexanone, tend to form dimers or other self-condensation products in the mix during the preparation and/or milling of the mix and/or during coating and curing the mix on the base film. We have found that when cyclohexanone dimers are present in any significant amount, such as more than about 0.1% or in some cases more than about 0.05% by weight based on the weight of the solvent present, a number of undesirable properties occur. Among those undesirable properties are solvent retention in the end recording media product, i.e., the cyclohexanone dimers appear to prevent sufficient removal of the solvent under desired media manufacturing conditions, which causes or contributes to undesirable odor in the media and decreased media performance. Apparently because of its higher molecular weight and lower volatility, the cyclohexanone dimers themselves are not removed with the solvent during the media drying and curing step, thereby also causing or contributing to the undesirable properties above and as follows. In addition, we have found that the cyclohexanone dimers also interfere with the effectiveness of the binder for the metal particles in the magnetic coating on the base film, which causes "shed", i.e., the undesirable property of the media shedding portions of the magnetic metal particles during use. The dimers can also interfere with the magnetic metal particle coating composition or mix by decreasing the pot life of the mix, i.e., the working time available from mixing the components together to coating the mix on the base film. The decreased pot life of the mix is believed to be at least in part due to the dimers causing accelerated curing of the binder and/or causing undesirable side reactions in the mix and in the coating before the mix can be applied and cured or dried to form the final metal particle coating on the base film. While the above discussion is primarily in reference to cyclohexanone, similar undesirable properties can result from the formation of dimers of other ketone solvents.

## SUMMARY OF THE INVENTION

We have found that the use of certain combinations of materials to treat the magnetic metal particles prevents self-condensation of ketone solvents and, consequently, avoids the undesirable properties which result from such self-condensation of the ketone solvents.

In one aspect, this invention is a method of treating magnetic metal particles comprising first mixing or otherwise contacting the particles with a solvent solution comprising (a) dispersing agent and (b) a fatty acid, and then removing the solvent. The amounts of dispersing agent and fatty acid used is that which is effective to substantially deactivate the metal particles from causing dimerization of ketone solvent in a magnetic coating mix.

In another aspect, a dry power composition comprises magnetic metal particles having deposited on the surfaces thereof a dispersing agent and a fatty acid. The amount of dispersing agent and fatty acid present on the surface of the metal particles is that which is effective to substantially deactivate the metal particles from causing dimerization of a ketone solvent in a magnetic coating mix.

In another aspect a method comprises first contacting magnetic metal particles with (a) a dispersing agent and (b) a fatty acid in a non-ketone organic solvent to pretreat the particles. After so contacting the particles, a ketone solvent and a binder are added to form a magnetic coating mix.

In another aspect, a method of forming a magnetic coating mix comprises mixing a ketone solvent, a binder and a dry powder comprising magnetic metal particles, which have been pretreated according to this invention with a dispersing agent and a fatty acid.

In another aspect, the invention provides an improved magnetic recording medium prepared by pretreating magnetic metal particles with a dispersing agent and a fatty acid. After the pretreatment, a coating mix is formed comprising the pretreated magnetic metal particles. This coating mix is applied to a substrate, such as a base film, to form the coated film, then the coated film is treated to remove the solvent and cure the binder to form a magnetic recording medium.

The methods and compositions of this invention provide improved magnetic coating mixes and improved recording media. Moreover, the methods and compositions of this invention reduce or effectively eliminate the formation of ketone solvent dimers and other ketone self-condensation products in magnetic coating mixes. By reducing or effectively eliminating the formation of those dimers and the like, a magnetic recording media product is obtained, having improved properties such as reduced shed, reduced odor, and improved durability. In addition, the methods and compositions of this invention provide improved processes for manufacturing magnetic recording media using ketone solvents in the magnetic coating mixes, such as by extending the pot life or working time for the magnetic coating mix applied to the base film. Other advantages and benefits of the methods and compositions of this invention will be apparent to one skilled in the art following the teachings of this disclosure.

## DESCRIPTION OF THE INVENTION

In the practice of this invention, magnetic metal particles are treated with a solvent solution of a dispersing agent and a fatty acid. The treatment is a pretreatment of the particles in the absence of binders and other components used in magnetic coating mixes in order to obtain the maximum effectiveness of the dispersing agent and fatty acid without interference from other components. The solvent can then be removed to form substantially dry particles having deposited thereon a combination of a dispersing agent and a fatty acid. The dispersing agent and fatty acid may be applied to the surfaces of the particles simultaneously, or may be applied sequentially in either order. The dispersing agents useful in the particle treatment in accordance with this invention include dispersing agents which have heretofore been used in magnetic particle coating mixes to aid in dispersing magnetic metal particles for coating on a base film. Similarly, the fatty acids useful in the present invention are those fatty acids which are compatible with the magnetic coating mix compositions and include fatty acids which have heretofore been used in magnetic coating mixes. In addition, the solvent useful in the present invention includes organic and aqueous solvents which have conventionally been used with magnetic metal particles to treat the particles or to form coating mixes. However, if a solvent containing a ketone functionality is used in the practice of this invention, it is desirable to remove all significant quantities of the solvent as well as any dimers or other by-products that may have formed in the ketone solvent mixture during the particle pretreatment before the dispersing agent and fatty acid effectively deactivated the metal particles from causing the dimer formation. Removal of the dimers and other ketone self-condensation products prevents them from degrading the properties of the media made from these particles.

Alternatively, in accordance with a preferred method of this invention, the particles are pretreated with a dispersing agent and fatty acid in a non-ketone organic solvent. Following this pretreatment, the magnetic metal particle coating mix is formed by adding the preferred ketone solvent and binder, without removing the non-ketone solvent in which the particles were pretreated with the dispersing agent and fatty acid. In this embodiment of the invention, there is no need to remove the solvent used in the pretreatment or to dry the particles before forming the coating mix, provided that a pretreatment solvent is selected that is compatible with the coating mix formulation and is compatible with the solvent removal conditions used in the media manufacturing process.

In accordance with this invention, it has been found that pretreatment of the magnetic metal particles with the combination of a dispersing agent and a fatty acid provides the unexpected benefit of deactivating the metal particles so that the particles do not cause formation of dimers or other self-condensation products of ketone solvents in magnetic coating mixes.

The methods of this invention produce recording media which have improved and unique properties compared to media prepared without pretreating the particles.

The methods and compositions of the present invention are described herein in terms of using the combination of a dispersing agent and a fatty acid to pretreat the magnetic metal particles to substantially

3

deactivate the magnetic metal particles to prevent them from causing dimerization of cyclohexanone. Cyclohexanone is a common solvent used in magnetic metal particle coating compositions and mixes, but other ketones such as methyl ethyl ketone and methyl isobutyl ketone are useful as solvents in such magnetic metal particle coating compositions and mixes. Thus, it will be recognized by those skilled in the art that the methods, compositions and magnetic recording medium of the present invention, meeting the defined criteria in terms of cyclohexanone will also be useful in such magnetic coating compositions and mixes containing other ketone solvents alone or in mixture with cyclohexanone, and will be useful in reducing or eliminating dimerization of other ketone solvents as well.

The ketone solvents used in the magnetic metal particle coating compositions or mixes of this invention may be present in amounts up to about 80% by weight based on the total weight of the coating composition or mix. It is generally desirable to avoid the use of excess solvent due to the increased time and energy required to remove the solvent from the coating after it is applied to the base film. The solvent should generally be present in at least sufficient amount to dissolve or dilute the binder to the desired degree, provide the desired consistency or viscosity of the magnetic metal particle mix for coating on the base film, as well as solubilize or suspend the other additives and components present in the coating composition or mix. In general, the solvent will be present in at least about 40% by weight based on the weight of the coating composition or mix; preferably the solvent will be present between about 40% and about 80%, more preferably between about 50% and about 70% by weight. Thus, the solids content of the mix preferably will be from about 20% to about 60% by weight. In addition, other solvents can be present in addition to the ketone solvent, such as toluene, tetrahydrofuran and other hydrocarbon solvents which are compatible with the ketone solvents, the binder systems and additives being used, and the base film on which the coating is to be applied. When other hydrocarbon solvents are present in the coating composition or mix, the ketone solvent will usually comprise at least about 10% by weight, preferably at least about 25%, and more preferably at least about 40% by weight based on the total weight of the coating composition or mix. A preferred ketone solvent for the methods and compositions of the present invention is cyclohexanone.

The magnetic metal particles useful in accordance with this invention are acicular particles, sometimes referred to as powders, which are known in the art for the manufacture of magnetic recording media. See Kirk-Othmer Encyclopedia of Chemical Technology, Vol 14, Third Edition, "Magnetic Tape", Perry et al., p. 732 at pp. 737-740 (1981). Magnetic metal particles useful in the invention provide superior performance compared to magnetic metal oxide particles. However, metal particles in some forms can pose handling problems. For example, unless stabilized against oxidation, these metal particles are easily oxidized in air and in some cases tend to be pyrophoric. Therefore, unstabilized particles can be hazardous to handle unless they have been stabilized for use in an air environment, or unless they are used in an inert atmosphere or kept under liquid to prevent oxidation. Therefore, magnetic metal particles are conventionally stabilized against undesired oxidation in a number of different ways, including oxidizing the surfaces of the magnetic metal particles under controlled conditions to form a protective oxide layer on the surface of each particle, or coating the metal particles with a film or coating of a polymer to form a protective film or coating on the particles to provide some degree of oxidative stability. For example, see U.S. patents 3,520,676 to Stahr; 3,634,063 to Hwang; 3,892,673 to Ehrreich et al.; 4,113,528 to Tokuoka et al.; 4,197,347 to Ogawa et al.; 4,318,735 to Mishina et al., 4,420,330 to Jakusch et al,; and 4,505,990 to Dasgupta

The solvents used in the pretreatment of the magnetic metal particles according to the present invention may be aqueous or organic, as described above. If the solvent is organic, it preferably should not contain ketone functionalities; if it does, then care will need to be taken, for reasons explained above, to remove from the powder when it is dried all significant quantities of any ketone dimers or other self-condensation products which may have formed during the pretreatment with the dispersing agent and fatty acid. If an aqueous solvent is used, it will be necessary to use a salt or other aqueous compatible form of the dispersing agent and the fatty acid.

The dispersing agents useful in accordance with the present invention include acid phosphate esters, sulfonic acid esters, sulfuric acid esters of higher alcohols, dithiophosphoric acid esters and other anionic surface active agents known in the art to be effective as dispersing agents for magnetic metal particles in magnetic coating mixes, as well as mixtures thereof. Among the anionic surface active agents useful in this invention are those contained in commercially available detergents. These dispersing agents should contain at least 2 carbon atoms, preferably from 2 carbon atoms to about 32 carbon atoms, more preferably from 2 carbon atoms to about 24 carbon atoms, and in some cases, most preferably between about 4 and about 16 carbon atoms. Also, preferably, these dispersing agents contain at least one phosphorous atom or at least one sulfur atom.

The fatty acids useful in accordance with the present invention include straight and branched chain alkyl fatty acids containing from about 12 to about 18 carbon atoms. For example, such acids include caprylic acid, capric acid, lauric acid, myristic acid, palmitic acid, stearic acid, oleic acid, elaidic acid, linoleic acid, linolenic acid, and stearolic acid, and the like.

The amounts of dispersant and fatty acid used with the magnetic metal particles according to the present invention will vary depending on the type of dispersant, the type of fatty acid, the particular magnetic metal particles to be pretreated and the particular ketone solvent to be used in forming the coating composition or mix. In general, the amounts of dispersant and fatty acid used must be at least those which are effective to substantially inhibit the formation of dimers or other self-condensation products of the ketone solvent in the coating composition or mix in which the particles are to be used. This is usually at least about 0.1% by weight of each based on the weight of the magnetic metal particles. The dispersant and fatty acid each may be used at any desired levels, but up to about 10% by weight of each based on the weight of the magnetic metal particles will usually be sufficient. Preferably, the dispersant and fatty acid each will be present in amounts from about 0.1% to about 10%, more preferably between about 0.2% and about 7%, and most preferably between about 0.5% and about 5% by weight.

The procedure followed in the examples set forth hereinafter identify preferred effective amounts of the dispersant and fatty acid to use. In general, it is desirable that the weight percent (based on the weight of the mix) of dimers or other ketone self-condensation products allowed to form in the coating composition or mix, should be less than about 0.5%, preferably less than 0.3%, and more preferably less than about 0.2% in order for a satisfactory magnetic recording media to be manufactured using the mix. In its most preferable embodiments, practice of the present invention inhibits formation of ketone dimers to levels which are essentially negligible, such as less than about 0.2%, preferably less than about 0.15% and most preferably less than 0.1%. The amount of ketone dimers which can be tolerated in the magnetic metal particle coating composition or mix for satisfactory magnetic recording media depends on the final properties of the media desired for different uses. In some cases, a dimer level of about 0.2% may be tolerable; in other cases, a dimer level of less than about 0.1% will be desirable for optimum use of the present invention. Usually the main criteria of finished media product performance will be durability and solvent retention properties of the media, which will determine the desired or required level which the ketone dimers should not exceed. Selection of the particular dispersant and fatty acid and adjustment of the amounts thereof to maintain the amount of dimers present in the mix below a selected maximum level and achieve the desired media properties will be apparent to one skilled in the art following the teachings and disclosure herein.

The following examples are set forth as illustrative embodiments of the present invention.

## EXAMPLE I

Magnetic iron metal particles having BET greater than 30 $m^2/g$ and a pH of 9 (such as those commercially available from Dowa Mining Co. Ltd., Tokyo, Japan) were pretreated in different samples with an acid phosphate ester dispersing agent commercially available from GAF under the designation RE-610 and myristic acid. In each sample, 50 grams of the metallic particles were mixed with 250 ml of toluene together with the indicated amounts of acid phosphate ester and myristic acid. After thorough mixing, the toluene was removed from the pretreated particles, which were then milled in cyclohexanone solvent for 1 hr. using a 1-pint glass media "quickee" mill. The milled mix contained 17% solids and 83% by weight cyclohexanone. Each milled metallic particle/cyclohexanone mix was stored for one week at room temperature, after which the weight percent cyclohexanone dimers was measured. The results are set forth in the following Table 1.

Table 1

| Sample No. | Amount of Acid Phosphate Ester | Amount of Myristic Acid | %Dimers (1 hr.) | %Dimers (1 wk.) |
|---|---|---|---|---|
| 1 | 0 | 0 | 1.4 | 15.38 |
| 2 | 2g | 0 | 0.5 | 12.14 |
| 3 | 0 | 2g | 0.4 | 5.30 |
| 4 | 2g | 2g | 0.15 | 2.69 |

## EXAMPLE II

In this Example, the procedure of Example I was repeated using 25 grams of metal particles in each sample and using ethanol solvent instead of toluene. The results obtained are shown in the following Table 2:

Table 2

| Sample No. | Amount of Acid Phosphate Ester | Amount of Myristic Acid | %Dimers (1 hr.) | %Dimers (1 wk.) |
|---|---|---|---|---|
| 1 | 0 | 0 | 0.85 | 11.94 |
| 2 | 0 | 1g | 0.04 | 1.92 |
| 3 | 1g | 1g | 0.04 | 0.28 |

EP 0 359 511 A2

## EXAMPLE III

For comparative purposes, three samples were prepared using the magnetic metal particles as used in Example I. The particles were milled in cyclohexanone solvent along with the amounts of the dispersant and fatty acid specified in Table 3. The dispersant and fatty acid were added to the metal particle-cyclohexanone slurry prior to the milling and were present during the entire milling step. In each sample, 20 grams of metal particles were milled in a 1-pint glass media "quickee" mill for 1 hour. As in Example I, each milled magnetic metal particle coating composition mix containing the cyclohexanone solvent was stored at room temperature for 1 week, after which the amount of cyclohexanone dimers formed was measured. The results are set forth in the following Table 3.

Table 3

| Sample No. | Amount of Acid Phosphate Ester | Amount of Myristic Acid | %Dimers (1 hr.) | %Dimers (1 wk.) |
|---|---|---|---|---|
| 1 | 1g | 0 | 3.34 | 15.1 |
| 2 | 1g | 1g | 1.36 | 1.98 |
| 3 | 1g | 4g | 0.32 | 0.70 |

As can be seen from the above examples, pretreatment of metal particles for magnetic recording media, in accordance with this invention before the particles come into contact with ketone solvent is important in avoiding formation of ketone dimers. With pretreatment, small amounts of the dispersing agent and fatty acid provide effective prevention of ketone dimer formation in magnetic recording media coating mixes. In contrast, if the dispersing agent and fatty acid are used, in situ, with the ketone solvent in the coating mix, acceptably low levels of ketone dimers are not achieved except with unacceptably high levels of the dispersing agent and fatty acid, e.g., 25% by weight total based on the weight of the particles. In addition, it can also be seen that pretreatment of the particles with the combination of dispersant and fatty acid more effecitvely eliminates formation of ketone dimers than does pretreatment with either of them alone.

**Claims**

1. A method of treating magnetic metal particles that are to be used in magnetic recording media comprising contacting the magnetic metal particles, in the absence of a binder, with (a) a dispersing agent and (b) a fatty acid.

2. A method according to claim 1 in which the magnetic metal particles, dispersing agent and fatty acid are mixed together to effect the contacting of said magnetic metal particles.

3. A method according to claim 1 or claim 2, further comprising mixing the contacted magnetic metal particles with a ketone solvent and a binder to form a magnetic coating mix.

4. A method according to any of claims 1 to 3 in which the magnetic metal particles are contacted with said dispersing agent and said fatty acid in the presence of a non-ketone organic solvent.

5. A method according to claims 1, 2, 3 or 4, wherein prior to mixing said contacted magnetic metal particles with a binder, any solvent present in the contacted magnetic metal particles is removed.

6. A method according to either claim 1 or claim 3, wherein the fatty acid contains from about 12 to about 18 carbons.

7. A method according to claim 3 wherein the fatty acid comprises at least one of caprylic acid, capric acid, lauric acid, myristic acid, palmitic acid, stearic acid, oleic acid, elaidic acid, linoleic acid, linolenic acid and stearolic acid, or a mixture of at least two thereof.

8. A method according to any of claims 1, 3 or 7, wherein the dispersing agent comprises at least one of an acid phosphate ester, a sulfonic acid ester, a sulfuric acid ester of higher alcohols, a dithiophosphoric acid ester, an anionic surface active agent or a mixture of at least two thereof.

9. A method according to either claim 1, 3 or 8, wherein each of said fatty acid and said dispersing agent is present to an amount between about 0.2% and about 10% by weight based on the weight of the magnetic metal particles.

10. A dry powder composition for use in magnetic recording media comprising magnetic metal particles having on the surfaces thereof a deposition of a dispersing agent and a fatty acid.

11. A composition according to claim 10, wherein the magnetic metal particles are in a mixture with a ketone solvent and a binder to form a magnetic coating mix.

12. A composition according to either claim 10 or claim 11, wherein the dispersing agent comprises at least one of an acid phosphate ester, a sulfonic acid ester, a sulfuric acid ester of higher alcohols, a dithiophosphoric acid ester, an anionic surface active agent or a mixture of at least two thereof.

13. A composition according to any of claims 10 to 12, wherein the fatty acid comprises at least one of caprylic acid, capric acid, lauricacid, myristic acid, palmitic acid, stearic acid, oleic acid, elaidic acid, linoleic acid, linolenic acid, stearolic acid or a mixture of at least two thereof.

6

14. A composition according to any of claims 10 to 13, wherein the fatty acid contains from about 12 to about 18 carbons.

15. A composition according to any of claims 10 to 13, wherein each of said fatty acid and said dispersing agent is present to an amount between about 0.2% and about 10% by weight based on the weight of the magnetic metal particles.

16. A magnetic recording medium comprising a substrate and a binder containing magnetic metal particles which are secured to the substrate by means of the binder, the particle shaving a surface deposition of a dispersing agent and a fatty acid.

17. A magnetic recording medium according to claim 16, wherein the dispersing agent comprises at least one of an acid phosphate ester, a sulfonic acid ester, a sulfuric acid ester, or higher alcohols, a dithiophosphoric acid ester, an anionic surface active agent or a mixture of at least two thereof.

18. A magnetic recording medium according to either claim 16 or claim 17, wherein the fatty acid comprises at least one of a caprylic acid, capric acid, lauric acid, myristic acid, palmitic acid, stearic acid, oleic acid, linoleic acid, linolenic acid, stearolic acid, or a mixture of at least two thereof.

19. A magnetic recording medium according to any of claims 16 to 18, wherein each of said fatty acid and said dispersing agent is present to an amount between about 0.2% and about 10% by weight based on the weight of the magnetic metal particles.

20. A method of making a magnetic recording medium according to any of claims 16 to 19, comprising dispersing the said magnetic particles in the binder and applying the binder to the substrate, characterised in that the particles are dispersed with the aid of a solvent and in that the particles are free of said solvent before they are thus dispersed.